# EUROPEAN PATENT SPECIFICATION

(11) **EP 2 640 563 B1**
(45) Date of publication and mention of the grant of the patent: **05.08.2015**
(21) Application number: 11799132.3
(22) Date of filing: 14.11.2011
(51) Int. Cl.: B29C 49/64, B29C 49/78, B29C 49/68, B29C 35/08, B29B 13/02

(54) **APPARATUS AND METHOD FOR HEATING PARISONS OF THERMOPLASTIC MATERIAL**
VORRICHTUNG UND VERFAHREN ZUR ERWÄRMUNG VON FORMLINGEN AUS THERMOPLASTISCHEM MATERIAL
APPAREIL ET PROCÉDÉ DE CHAUFFAGE DE PARAISONS DE MATÉRIAU THERMOPLASTIQUE

(30) Priority: 19.11.2010 IT BO20100695
(43) Date of publication of application: 25.09.2013
(73) Proprietor: Sacmi Cooperativa Meccanici Imola Societa' Cooperativa, 40026 Imola (IT)
(72) Inventor: MARASTONI, Daniele, I-40026 Imola (IT); STOCCHI, Gabriele, I-40026 Imola (IT)
(74) Representative: Conti, Marco
(86) International application number: PCT/IB2011/055061
(87) International publication number: WO 2012/066459

(56) References cited:
- WO-A1-2010/122469
- DE-A1-102007 025 527
- FR-A1- 2 878 185
- US-A1- 2007 096 352

## Description

### Technical Field

This invention relates to an apparatus for heating parisons of thermoplastic material.

The parisons are used to make containers by blowing the parisons in a mould.

### Background Art

The parisons are tubular, that is, cylindrical, in shape and have a closed bottom and a neck (defining an opening).

Generally speaking, the neck of the parison is delimited from the rest of the body by a ring, also known as flange. It should be noted, however, that the flange might also be absent.

The parisons are heated so that they are in the required viscous state when they are blown into the moulds of the blow-moulding machine.

For this reason, it is important to guarantee uniform temperature in the body of the parison (uniform along the axial extension and along the radial extension of the parison). The neck of the parison, on the other hand, must remain cool (that is, at room temperature).

In effect, when the parison is inserted into the blow mould, the neck remains outside the mould (and is therefore not blow moulded), while the parison body is inside the mould so that when the moulding fluid is blown into the parison, the parison body expands until the wall of the parison takes the shape of the mould.

Thus, if the body of the parison is not uniformly heated to the required temperature, problems may arise in the moulding process or at the later stage of filling the container.

For example, the zone joining the neck to the body below it might not expand to the full size. This defect may cause the container to break if it is subsequently filled at high pressure.

On the other hand, if the neck is partly heated when the parison is transferred into the mould and when blowing takes place, there is the risk of the neck itself being damaged.

Apparatuses for heating parisons are known which comprise conveyors which apply roto-translational motion to the parisons while transporting them along a predetermined path through one or more heating tunnels.

Inside each tunnel there are heating means which are operatively positioned to heat the parisons.

In the prior art solutions, these heating means consist of a series of incandescent lamps mounted on at least one side of the tunnel. More specifically, a plurality of lamps are vertically spaced in such a way as to cover the axial extension of the body of each parison.

The lamps are positioned at a predetermined distance from the parison in transit so as to heat the surface of the parison body as uniformly as possible.

The need to heat the body of the parison to a predetermined uniform temperature without heating the neck of the parison is the source of considerable difficulties. In effect, the temperature of the different parts of the parison tends to become uniform. It is difficult to heat the body of the parison without heating its neck, especially as parisons are relatively small in size.

To overcome these problems, the prior art apparatuses are provided with a shield system which is designed to separate a lower space (in which the body of the parison is positioned (during parison transit through the heating apparatus), from an upper space in which the neck of the parison is positioned.

This has the purpose of limiting the spreading of heat from the lower space, which is heated by the heating means, to the upper space.

Such a shield system is not, however, sufficient to avoid the above mentioned problems.

In fact, the heat generated in the lower space tends to propagate upwards, thereby also heating the neck of the parison.

In some prior art solutions, therefore, (for example the one known from patent document WO03024693A1) heating in the vicinity of the neck is increased and, at the same time, the neck of the parison is cooled during parison transit.

In this solution, the heating apparatus comprises a lamp positioned at the upper zone of the parison body (that is, near the neck) in such a way that it is closer to the parison body than the other lamps, while a flow of cool air keeps the neck itself at a lower temperature.

Even this solution, however, is not free of disadvantages.

First of all, the apparatus as a whole is highly complex and expensive.

Moreover, the parison is subjected to high thermal stresses caused by prolonged overheating and cooling of parts of it which are close to each other (the upper zone of the body and the neck).

Indeed, it should be noted that reducing the distance between the lamp and the parison entails a high risk of damaging the parison, especially its surface film, thereby diminishing the mechanical strength properties of the parison and creating the risk of the parison breaking during blow moulding.

Moreover, the presence of heat exchangers on the conveyor in order to cool the neck of the parison makes the apparatus very cumbersome.

Other solutions are known from patent documents US2007/096352A1, WO2010/122469A1, DE102007025527A1 and FR2878185A1.

### Disclosure of the Invention

This invention has for an aim to provide a thermoplastic parison heating apparatus which overcomes the above mentioned drawbacks of the prior art.

More specifically, the aim of the invention is to provide a thermoplastic parison heating apparatus which can achieve a temperature gradient such that the temperature of the parison changes very rapidly between the hot area (body) and the cold area (neck), while minimizing the risk of damage to the parison itself.

Another aim of the invention is to provide a heating apparatus that is simple in structure and reduced in size.

These aims are fully achieved by the thermoplastic parison heating apparatus according to the invention as characterized in the appended claims.

More specifically, the apparatus of this application comprises a conveyor configured to transport the parisons along a predetermined path and heating means operating on the parisons along the path.

According to the invention, the heating means comprise at least one laser emitter configured to generate a laser beam which strikes at least one portion of the parisons along the predetermined path. Preferably, the laser emitter is of the CO2 type.

The laser emitter makes it possible to heat a desired portion of the parison in a very precise and selective manner, limiting to a minimum the unwanted heating of other portions of the parison (for example, the neck).

Preferably, at least one of the laser emitters is configured to generate a laser beam which strikes a surface of the parison body in the vicinity of the neck.

The precision of the beam from the emitter makes it possible to heat only the predetermined zone in a very rapid and localized manner.

The invention also provides a method for heating parisons made of thermoplastic material (and each designed to be blown in a mould to form a container).

The method comprises a step of transporting the parisons along a predetermined path and a step of heating the parisons as they move along at least one stretch of the predetermined path.

According to the invention, the heating step comprises a step of generating a laser beam which strikes at least one portion of the parisons.

Preferably, the laser beam is oriented in such a way as to heat a parison body surface adjacent to a neck, each parison having a body with a closed bottom and a neck which defines an opening.

Preferably, the laser beam is generated at an end stretch of the predetermined path relative to a direction of parison transit along the path.

The conveyor defines an input station (where the parisons are fed to the apparatus) and an output station (where the heated parisons are made available at output of the apparatus).

In this light, preferably the at least one laser emitter is arranged in proximity to the output station.

Preferably, the heating means comprise:
- said at least one laser emitter, arranged in the output station or in proximity thereof;
- heaters of other typologies (which do not generate laser beams, such as lamps or hot air nozzles, or other known heat sources), arranged in a region of the apparatus along the conveyor between the input station and the output station.

Said arrangement is advantageous because it allows an optimized temperature distribution in the parison at the output of the apparatus, with a particularly simple and economic construction of the apparatus itself.

### Brief Description of the Drawings

These and other characteristics of the invention will become more apparent from the following detailed description of a preferred, non-limiting embodiment of it, with reference to the accompanying drawings, in which:
- Figure 1 is a schematic plan view of the thermoplastic parison heating apparatus;
- Figure 2 is a schematic face view from the direction indicated by the arrow A in Figure 1, illustrating a detail of the apparatus of Figure 1;
- Figure 3 illustrates another embodiment of the apparatus of this application, in particular the zone of the heating tunnel of Figure 2, again in a schematic face view;
- Figure 4 illustrates a further embodiment of the apparatus of this application, in particular the zone of the heating tunnel of Figure 2, and again in a schematic face view;
- Figure 5 illustrates one of the heating tunnel zones of the apparatus of Figure 1 in a schematic top plan view.

### Detailed Description of the Preferred Embodiments of the Invention

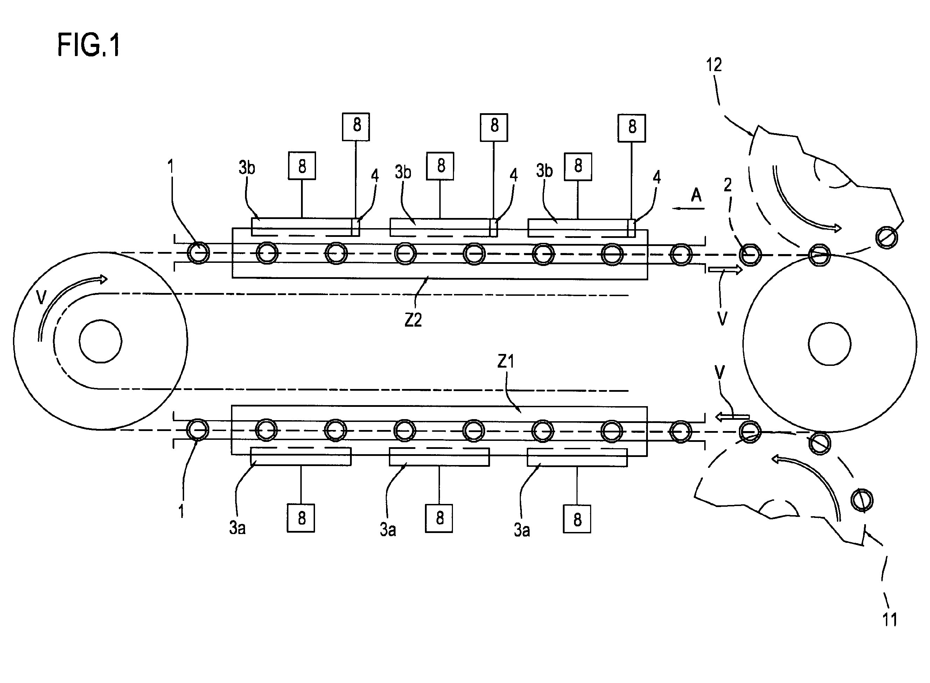

With reference to the accompanying drawings, in particular Figure 1, the apparatus of this application is denoted by the reference numeral 100; the apparatus 100 is used to heat parisons 1 made of thermoplastic material and designed to make containers for liquids by blowing the parisons into moulds during a subsequent processing step.

The apparatus 100 comprises a conveyor 2 configured to transport the parisons 1 along a predetermined path P.

The apparatus 100 also comprises heating means 3 operating on the parisons 1 along at least one stretch of the predetermined path P.

According to the invention, the heating means 3 comprise at least one laser emitter 4.

The laser emitter 4 is configured to generate a laser beam F which strikes at least one portion of the parisons 1 along the predetermined path P.

It should be noted that each parison 1 consists of a body 5, with a closed bottom, and a neck 6 defining an opening.

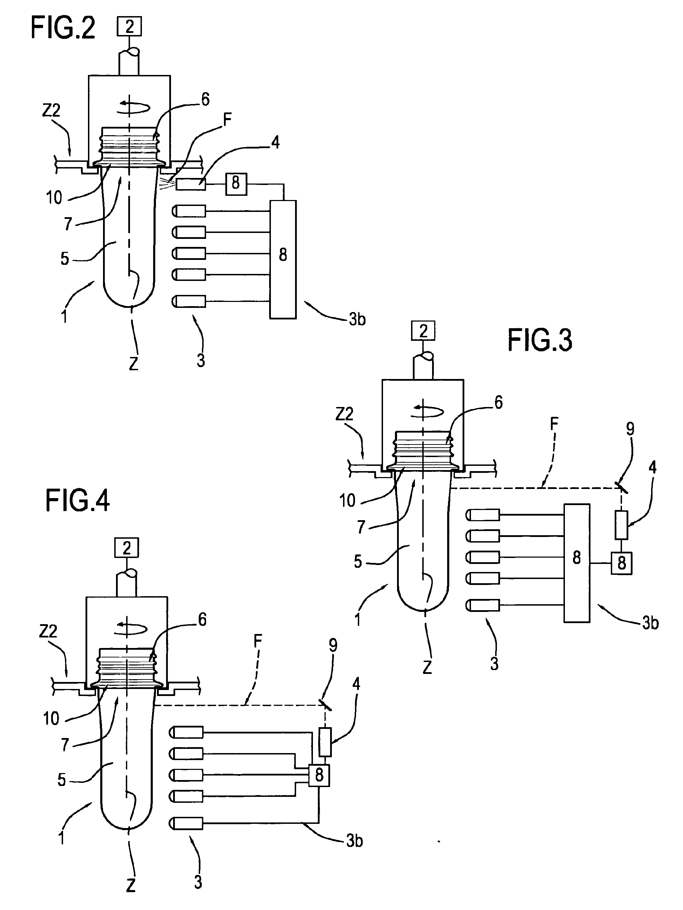

Also, in the example illustrated (Figures 2 to 5), the parison 1 comprises a separating flange 10 (consisting of an enlarged annular portion) between the neck 6 and the body 5. The presence of the flange 10 is not essential, however; in effect, the apparatus 100 is designed to work with parisons 1 with flanges 10 or without flanges 10.

Preferably, the laser emitter 4 is configured to generate a laser beam F which strikes a surface 7 of the body 5 of the parison 1 in the vicinity of the neck 6.

In light of this, the surface 7 is defined by the portion adjacent to the neck 6 (if the parison 1 is supported vertically with the neck at the top and is provided with a flange, as in the example illustrated, the surface just below the flange 10).

As illustrated in Figure 1, the laser emitter 4 is mounted at an end stretch of the predetermined path P relative to a direction V of transit (indicated by an arrow in Figure 1) of the parisons 1 along the path P.

In other words, the path P of parison 1 transit in the apparatus 100 has an infeed zone (of the parisons into the apparatus) and an outfeed zone (of the parisons out of the apparatus). Preferably, the at least one laser emitter 4 is mounted near the outfeed zone of the path P.

In light of this, it should be noted that the apparatus 100 preferably comprises two distinct groups 3a and 3b of heating means 3 operating on the parisons 1 in two distinct zones Z1, Z2 along the predetermined path P.

The first zone Z1 and the second zone Z2 are spaced from each other along the path P, in such a way that the parisons, as they move from infeed to outfeed, meet the zone Z1 first and then the zone Z2.

Preferably, the path P has the shape of a ring.

Thus, the heating means are preferably in the first and the second zone Z1 and Z2.

Preferably, at the zones Z1 and Z2, the apparatus 100 comprises a first and a second heating tunnel, respectively.

The tunnels Z1 and Z2 are shaped in such a way that during transit of the parisons 1 through the tunnels, the bodies 5 of the parisons 1 are inside the tunnels, while the necks 6 of the parisons 1 are preferably above the tunnels.

The heating means 3 are mounted near the tunnels Z1 and Z2 to heat the bodies 5 of the parisons 1.

The conveyor 2 is equipped with gripping elements (not illustrated since they are of known type) designed to support the parisons 1 in transit along the path P.

Preferably, the conveyor 2 is configured to support the parisons 1 individually and with predetermined spacing from each other along the path P.

More preferably, the conveyor 2 is configured to support the parisons 1 with predetermined constant spacing from each other along the path P.

The conveyor 2 is configured to move each single parison 1 according to a roto-translational movement of the parison 1 itself.

Preferably, the conveyor 2 is configured to move the parisons 1 with the possibility of varying the feed speed at which the parisons 1 advance along the path P.

Also, preferably, the conveyor 2 is configured to move the parisons 1 with the possibility of varying the speed at which the parisons 1 rotate about their axes Z as they move along the path P.

The conveyor is described in detail in patent document PCT/IB2010/052937 which is by the same Applicant as this invention and which is incorporated herein by reference.

In light of this, preferably, the laser emitter 4 is positioned in (that is to say, it forms part of) the second group 3b of heating means, located downstream of the first group 3a relative to the direction V of transit of the parisons 1.

This advantageously makes it possible to achieve optimum and precise heating before the parison 1 is transferred into the blow mould.

It should be noted that the direction V is indicated as starting from a portion of the path P where there is a feed station 11 for feeding the parisons 1 to the apparatus 100 (the station being illustrated generically in dashed line style since it is of known type).

Downstream of the second tunnel Z2, where the second group 3b of heaters resides (again relative to the direction V of movement of the parisons 1) there operates a pick-up station 12 for picking up the heated parisons 1 and making them available for feeding to a blow-moulding machine; this pick-up station, too, is illustrated in dashed line style since it is of very well known type.

Preferably, the heating means comprise a plurality of laser emitters 4.

Further, the heating means 3 preferably also comprise heaters other than the laser emitters (for example, incandescent lamps or other known heaters).

Preferably, the heaters other than the laser emitters are located at least in the first zone Z1.

This advantageously allows the cost of the apparatus 100 to be kept very low but without diminishing its performance.

According to another aspect of the invention, the apparatus 100 comprises a control unit 8 connected to the laser emitter 4 to control at least one quantity of thermal energy transferred to the parisons 1.

For example, the control unit 8 is configured to drive the laser emitters 4 in such a way as to vary one or more of the following parameters:
- duration of laser beam F emission;
- extension of laser beam F (that is to say, the length of the stretch of the parison 1 path covered by the laser beam F);
- intensity of laser beam F (correlated with the frequency of the wave generated);
- laser beam focal point.

Preferably, the control unit 8 is configured to vary the intensity parameter of the laser beam F emitted by the laser emitter 4 as a function of the feed speed at which the parisons 1 advance along the path P.

Alternatively or in addition to, the control unit 8 is configured to vary the duration and/or the intensity parameter of the laser beam F, as a function of the feed speed at which parisons 1 advance along the path P.

This advantageously allows a high degree of precision in heating the portion of the body 5 of the parison 1 adjacent to the neck 6, without the risk of overheating.

It should be noted that optimization of heating is a result that is advantageously achieved even when the feed speed at which the parisons 1 advance along the path P is varied according to the speed of the active machines downstream of the apparatus 100 (for example, the blow-moulding machine or the filling machine).

Further, preferably, the control unit 8 is configured to vary the duration and/or the extension parameter of the laser beam F, as a function of the speed at which the parisons 1 rotate about their axes Z.

More specifically, the control unit 8 is programmed to subject each parison 1 to laser irradiation for an interval of time (that is, for a stretch of the path) such that during such interval (or stretch) the number of revolutions performed by the parison 1 around itself is equal to a whole number.

This advantageously makes it possible for the laser beam F to heat the body 5 of the parison 1 uniformly (meaning by uniformly that the quantity of heat transferred to the parison 1 is distributed radially in uniform manner with respect to the axis of rotation of the parison).

It should be noted that the laser emitters 4 are configured to emit the laser beam F in such a way as to direct it along a predetermine propagation plane, so that the laser beam F strikes each parison 1 on a predetermined portion of the body 5 (identified along the axis of rotation Z of the parison 1) and in a predetermined stretch of the path P.

In light of this, invention contemplates orienting the laser emitter 4 in such a way that the laser beam F emitted is perpendicular to the axis of rotation Z of the parison 1 (this solution is illustrated in Figure 2).

Alternatively, or in addition, the apparatus 100 might comprise one or more mirrors 9 (defining a reflecting system) configured to deflect the beam F according to a predetermined orientation.

That way, the laser emitter 4 can be positioned according to any orientation (in the example of Figure 3 the beam F is generated along a plane parallel with the axis of rotation Z of the parison 1).

This advantageously makes it possible to optimize the overall dimensions of the apparatus.

In particular, in the example of Figure 2, the laser emitter 4 is mounted horizontally, that is to say, positioned perpendicularly to the parisons 1 in transit, in such way as to direct the laser beam F straight at the predetermined surface 7.

In the example of Figure 3, the laser emitter 4 is mounted vertically. In this case, the apparatus 100 comprises, as mentioned above, one or more mirrors 9 to direct the beam F at the parison 1 (more specifically, at the surface 7 of the body 5 of the parison 1).

Preferably, the laser emitter 4 is fixed relative to a frame of the apparatus 100 (not described since it is of a *per se* known type).

In this case, the emitter 4 is configured to emit a beam F having an extension sufficient to strike the parison 1 along a preset stretch of the path P and such as to generate the required heat on the parison 1 (more specifically, on the surface 7).

Alternatively, the laser emitter 4 (or laser emitters 4, if there is more than one of them) are movably associated with a frame of the apparatus 100 in such a way that they can move relative to it.

More specifically, the laser emitter 4 is associated with the frame in such a way that it can rotate about an axis (which is preferably parallel with the axis of rotation Z of the parisons 1).

In addition, or alternatively, the laser emitter 4 is associated with the frame in such a way that it can move along a predetermined stretch of the path P (preferably in such a way that it can translate along a straight stretch of the path P).

In any case, in the solutions where the emitter 4 is movable, the apparatus 100 comprises an actuator 13 (constituting movement means) connected to the emitter 4 (for example, the actuator comprises a brushless motor or other *per se* known systems, provided they allow a high degree of positioning precision).

It should be noted that the actuator 13 is driven by a control unit (preferably, the control unit 8 described above) in a manner coordinated with the movement of the parisons 1 along the path P.

In light of this, the control unit 8 preferably receives a signal representing the position adopted at a given instant by the parison 1 along the path P and outputs a drive signal for the actuator 13 in order to allow the parison following movement described above.

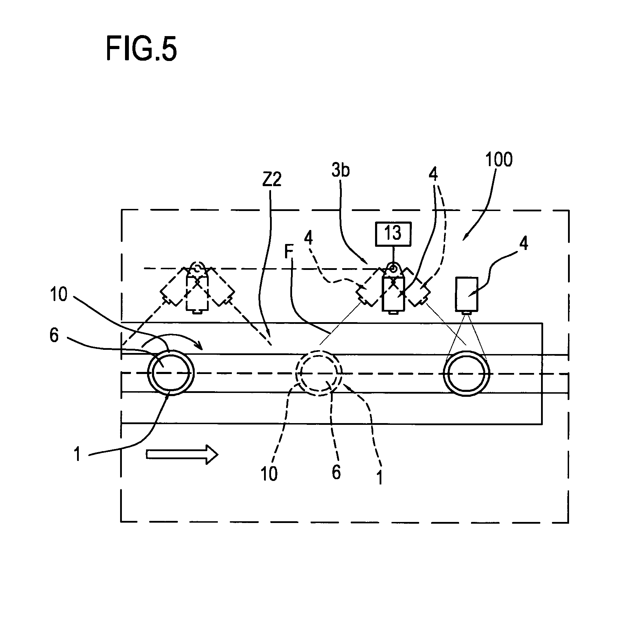

In light of this, Figure 5 illustrates an example embodiment where the laser emitter 4 is configured to emit a laser beam F which is movable (by rotation) along the path P in such a way as to follow the parison 1 along a preset stretch of the path P.

Advantageously, thanks to this "following" function, relatively low-power, and hence economical, laser emitters 4 can be used.

Moreover, it should also be noted that (alternatively, or in addition, to what is described above) the laser emitter 4 might also be fixed and the apparatus 100 might comprise movable mirrors 9 (for example, laser scanners), configured to vary the angle of reflection of the beam F in order to allow the laser beam F to follow the parison 1 as the latter advances.

It should be noted that the heating means 3 might consist entirely of laser emitters 4 (as in the example illustrated in Figure 4).

In that case, both of the tunnels Z1 and Z2 are composed entirely of series 3a and 3b of laser emitters 4 configured to strike the whole surface of the body 5 of the parison 1 (meaning by this the full extension of the parison 1 along the latter's axis of rotation Z) with the respective laser beams F.

Thus, the invention also provides a method for heating parisons 1 made of thermoplastic material.

The method comprises a step of transporting the parisons 1 along a predetermined path P and a step of heating the parisons 1 as they move along at least one stretch of the predetermined path P.

According to the invention, the heating step comprises a step of generating a laser beam F which strikes at least one portion of the parisons 1.

Preferably, the laser beam F is oriented in such a way as to heat a parison 1 body 5 surface 7 adjacent to a neck 6, each parison 1 having a body 5 with a closed bottom and a neck 6 which defines an opening.

Preferably, the laser beam is generated at an end stretch of the predetermined path P relative to a direction V of parison 1 transit along the path P.

There is also a step of modifying the orientation of the laser beam F in a manner coordinated with the position of the parison 1 along the path P so as to allow the laser beam F to follow the parison 1.

The step of modifying the orientation the laser beam F entails moving the laser emitter 4 (by rotation and/or translation along a stretch of the path P) and/or moving a mirror 9 configured to reflect the laser beam F.

The step of modifying the orientation the laser beam F is preferably controlled by the control unit 8.

## Claims

1. An apparatus for heating parisons (1) made of thermoplastic material, comprising:
- a conveyor (2) configured to transport the parisons (1) along a predetermined path (P);
- heating means (3) operatively active on the parisons (1) along at least one stretch of the predetermined path (P), wherein the heating means (3) comprise at least one laser emitter configured to generate a laser beam (F) which strikes at least one portion of the parisons (1) along the predetermined path (P),
**characterized in that** the conveyor (2) defines an input station, where the parisons are fed to the apparatus, and an output station, where the heated parisons are made available at output of the apparatus, wherein the at least one laser emitter is arranged at the output station and wherein the heating means further comprise heaters of other typologies, other than laser emitters, comprising incandescent lamps or hot air nozzles, arranged in a region of the apparatus along the conveyor between the input station and the output station.

2. The apparatus according to claim 1, wherein the at least one laser emitter (4) is configured to generate a laser beam (F) which strikes a parison (1) body (5) surface (7) adjacent to a neck (6), each parison (1) having a body (5) with a closed bottom and a neck (6) which defines an opening.

3. The apparatus according to claim 1 or 2, wherein the at least one laser emitter (4) is mounted at an end stretch of the predetermined path (P) relative to a direction (V) of transit of the parisons (1) along the path (P).

4. The apparatus according to claim 3, comprising a first and a second group (3a, 3b) of heating means (3) operating on the parisons (1) in a first and a second zone (Z1, Z2) along the predetermined path, respectively, the second zone (Z2) being located downstream of the first zone (Z1) relative to the direction (V) of transit of the parisons (1) along the path, and wherein the laser emitter (4) is located in the second zone (Z2).

5. The apparatus according to any of the preceding claims, comprising a control unit (8) connected to the at least one laser emitter (4) to control the thermal energy transmitted to the parisons through the beam (F) emitted by the laser emitter (4).

6. The apparatus according to claim 5, wherein the control unit (8) is programmed to vary the intensity of the laser beam (F), emitted by the laser emitter (4), as a function of the feed speed at which the parisons (1) advance along the predetermined path (P).

7. The apparatus according to claim 5 or 6, wherein the control unit (8) is programmed to vary the duration of application of the beam (F), emitted by the laser emitter (4) on each parison, as a function of the speed at which the parisons (1) rotate about their axes (Z), in order to allow the laser beam (F) to heat the surface (7) of the body (5) of each parison (1) uniformly.

8. The apparatus according to any of the claims from 2 to 7, comprising a system of mirrors (9) configured to reflect the beam (F) emitted by the at least one laser emitter (4) in order to direct it at the surface (7) of the parison body (5).

9. The apparatus according to any of the preceding claims, wherein the at least one laser emitter (4) is configured to emit a beam (F) having an extension sufficient to strike the parison (1) along a preset stretch of the path (P) during a corresponding movement of the parison, the emitter (4) being fixed relative to the parisons.

10. The apparatus according to any of the claims from 1 to 8, wherein the at least one laser emitter (4) is configured to emit a laser beam (F) which is movable along the path (P), in such a way as to follow the parison (1) along a preset stretch of the path (P) during a corresponding movement of the parison.

11. A method for heating parisons (1) made of thermoplastic material, comprising a step of transporting the parisons (1) along a predetermined path (P) and a step of heating the parisons as they move along at least one stretch of the predetermined path (P), wherein the heating step comprises a step of generating a laser beam (F) which strikes at least one portion of the parisons (1),
**characterized in that** the conveyor (2) defines an input station, where the parisons are fed to the apparatus, and an output station, where the heated parisons are made available at output of the apparatus, wherein the at least one laser emitter is arranged at the output station and wherein heaters of other typologies, other than laser emitters, comprising incandescent lamps or hot air nozzles, are arranged in a region of the apparatus along the conveyor between the input station and the output station.

12. The method according to claim 11, wherein the laser beam (F) is oriented in such a way as to heat a parison (1) body (5) surface (7) adjacent to a neck (6), each parison (1) having a body (5) with a closed bottom and a neck (6) which defines an opening.

13. The method according to claim 11 or 12, wherein the laser beam is generated at an end stretch of the predetermined path (P) relative to a direction (V) of transit of the parisons (1) along the path (P).

## Patentansprüche

1. Vorrichtung zum Erwärmen von Formlingen (1) aus thermoplastischem Material, umfassend:
- einen Förderer (2), ausgelegt, um die Formlinge (1) entlang eines vorgegebenen Wegs (P) zu transportieren;
- Erwärmungsmittel (3), die betriebswirksam auf den Formlingen (1) entlang mindestens eines Teilstücks des vorgegebenen Wegs (P) aktiv sind, wobei die Erwärmungsmittel (3) mindestens einen Lasersender umfassen, der ausgelegt ist, um einen Laserstrahl (F) zu erzeugen, der mindestens einen Abschnitt der Formlinge (1) entlang des vorgegebenen Wegs (P) streift, **dadurch gekennzeichnet, dass** der Förderer (2) eine Eingabestation definiert, wo die Formlinge der Vorrichtung zugeführt werden, und eine Ausgabestation, wo die erwärmten Formlinge an der Ausgabe der Vorrichtung zur Verfügung gestellt werden, wobei der mindestens eine Lasersender an der Ausgabestation angeordnet ist und wobei die Erwärmungsmittel zudem Heizer anderer Typen als Lasersender umfassen, umfassend Glühlampen oder Heißluftdüsen, angeordnet in einem Bereich der Vorrichtung entlang des Förderers zwischen der Eingabestation und der Ausgabestation.

2. Vorrichtung nach Anspruch 1, wobei der mindestens eine Lasersender (4) ausgelegt ist, um einen Laserstrahl (F) zu erzeugen, der eine Oberfläche (7) eines Körpers (5) eines Formlings (1) streift, angrenzend an einen Hals (6), wobei ein jeder Formling (1) einen Körper (5) mit einem geschlossenen Boden und einem Hals (6) aufweist, der eine Öffnung definiert.

3. Vorrichtung nach Anspruch 1 oder 2, wobei der mindestens eine Lasersender (4) an einem Endteilstück des vorgegebenen Wegs (P) montiert ist, relativ zu einer Richtung (V) des Durchgangs des Formlings (1) entlang des Wegs (P).

4. Vorrichtung nach Anspruch 3, umfassend eine erste und eine zweite Gruppe (3a, 3b) an Heizungsmitteln (3), die auf den Formlingen (1) in einer ersten und einer zweiten Zone (Z1, Z2) entlang des vorgegebenen Wegs wirken, wobei die zweite Zone (Z2) stromabwärts der ersten Zone (Z1) relativ zur Richtung (V) des Durchgangs der Formlinge (1) entlang des Wegs angeordnet ist und der Lasersender (4) in der zweiten Zone (Z2) angeordnet ist.

5. Vorrichtung nach einem der vorhergehenden Ansprüche, umfassend eine Steuereinheit (8), verbunden mit dem mindestens einen Lasersender (4), um die Wärmeenergie zu steuern, die über den vom Lasersender (4) abgegebenen Strahl (F) auf die Formlinge übertragen wird.

6. Vorrichtung nach Anspruch 5, wobei die Steuereinheit (8) programmiert ist, um die Stärke des vom Lasersender (4) abgegebenen Laserstrahls (F) als eine Funktion der Zuführungsgeschwindigkeit, mit der die Formlinge (1) entlang des vorgegebenen Wegs (P) vorgeschoben werden, zu variieren.

7. Vorrichtung nach Anspruch 5 oder 6, wobei die Steuereinheit (8) programmiert ist, um die Anwendungsdauer des vom Lasersender (4) abgegebenen Laserstrahls (F) auf jeden Formling als eine Funktion der Geschwindigkeit, bei der sich die Formlinge (1) um ihre Achsen (Z) drehen, zu variieren, um zu erlauben, dass der Laserstrahl (F) die Oberfläche (7) des Körpers (5) eines jeden Formlings (1) gleichmäßig erwärmt.

8. Vorrichtung nach einem der Ansprüche 2 bis 7, umfassend ein Spiegelsystem (9), ausgelegt, um den vom mindestens einen Lasersender (4) abgegebenen Strahl (F) zu reflektieren und ihn zur Oberfläche (7) des Formlingskörpers (5) zu lenken.

9. Vorrichtung nach einem der vorhergehenden Ansprüche, wobei der mindestens eine Lasersender (4) ausgelegt ist, um einen Strahl (F) abzugeben, der eine Reichweite aufweist, die ausreichend ist, um den Formling (1) entlang eines vorgegebenen Teilstücks des Wegs (P) während einer entsprechenden Bewegung des Formlings zu streifen, wobei der Sender (4) relativ zu den Formlingen fixiert ist.

10. Vorrichtung nach einem der Ansprüche 1 bis 8, wobei der mindestens eine Lasersender (4) ausgelegt ist, um einen Laserstrahl (F) abzugeben, der entlang des Wegs (P) bewegbar ist, sodass er dem Formling (1) entlang eines vorgegebenen Teilstücks des Wegs (P) während einer entsprechenden Bewegung des Formlings folgt.

11. Verfahren zum Erwärmen von Formlingen (1) aus thermoplastischem Material, umfassend einen Schritt zum Transportieren der Formlinge (1) entlang eines vorgegebenen Wegs (P) und einen Schritt zum Erwärmen der Formlinge, während sie sich entlang mindestens eines Teilstücks des vorgegebenen Wegs (P) bewegen, wobei der Schritt zum Erwärmen einen Schritt zum Erzeugen eines Laserstrahls (F) umfasst, der mindestens einen Abschnitt der Formlinge (1) streift, **dadurch gekennzeichnet, dass** der Förderer (2) eine Eingabestation definiert, wo die Formlinge der Vorrichtung zugeführt werden, und eine Ausgabestation, wo die erwärmten Formlinge an der Ausgabe der Vorrichtung zur Verfügung gestellt werden, wobei der mindestens eine Lasersender an der Ausgabestation angeordnet ist und wobei Heizer anderer Typen als Lasersender, umfassend Glühlampen oder Heißluftdüsen, in einem Bereich der Vorrichtung entlang des Förderers zwischen der Eingabestation und der Ausgabestation angeordnet sind.

12. Verfahren nach Anspruch 11, wobei der Laserstrahl (F) so ausgerichtet ist, dass er eine Oberfläche (7) eines Körpers (5) eines Formlings (1) erwärmt, angrenzend an einen Hals (6), wobei ein jeder Formling (1) einen Körper (5) mit einem geschlossenen Boden und einem Hals (6) aufweist, der eine Öffnung definiert.

13. Verfahren nach Anspruch 11 oder 12, wobei der Laserstrahl an einem Endsteilstück des vorgegebenen Wegs (P) relativ zu einer Richtung (V) des Durchgangs der Formlinge (1) entlang des Wegs (P) erzeugt wird.

## Revendications

1. Appareil de chauffage de paraisons (1) en matière thermoplastique, comprenant :
- un convoyeur (2) configuré pour transporter les paraisons (1) le long d'un parcours prédéterminé (P) ;
- des moyens de chauffage (3) fonctionnellement actifs sur les paraisons (1) le long d'au moins une portion du parcours prédéterminé (P), dans lequel les moyens de chauffage (3) comprennent au moins un émetteur laser configuré pour générer un faisceau laser (F) qui frappe au moins une partie des paraisons (1) le long du parcours prédéterminé (P),
**caractérisé en ce que** le convoyeur (2) définit un poste d'entrée, où les paraisons sont acheminées vers l'appareil, et un poste de sortie, où les paraison chauffées sont mises à disposition à la sortie de l'appareil, dans lequel l'au moins un émetteur laser est disposé au niveau du poste de sortie et dans lequel les moyens de chauffage comprennent de plus des dispositifs de chauffage d'autres types, différents des émetteurs laser, comprenant des lampes à incandescences ou des buses à air chaud, disposées dans une zone de l'appareil le long du convoyeur entre le poste d'entrée et le poste de sortie.

2. Appareil selon la revendication 1, dans lequel l'au moins un émetteur laser (4) est configuré pour générer un faisceau laser (F) frappant une surface (7) du corps (5) de paraison (1) adjacente à un col (6), chaque paraison (1) ayant un corps (5) ayant un fond fermé et un col (6) définissant une ouverture.

3. Appareil selon les revendications 1 ou 2, dans lequel l'au moins un émetteur laser (4) est monté au niveau d'une portion d'extrémité du parcours prédéterminé (P) correspondant à une direction (V) de passage de la paraison (1) le long du parcours (P).

4. Appareil selon la revendication 3, comprenant un premier et un second groupe (3a, 3b) de moyens de chauffage (3) agissant sur les paraisons (1), respectivement, dans une première et une seconde zone (Z1, Z2) le long du parcours prédéterminé, la seconde zone (Z2) étant située en aval de la première zone (Z1) par rapport à la direction (V) de passage des paraisons (1) le long du parcours, et dans lequel l'émetteur laser (4) est situé dans la seconde zone (Z2).

5. Appareil selon l'une quelconque des revendications précédentes, comprenant une unité de commande (8) reliée à l'au moins un émetteur laser (4) pour commander l'énergie thermique transmises aux paraisons par le faisceau (F) émis par l'émetteur laser (4).

6. Appareil selon la revendication 5, dans lequel l'unité de commande (8) est programmée pour varier l'intensité du faisceau laser (F) émis par l'émetteur laser (4), en fonction de la vitesse d'acheminement à laquelle les paraisons (1) progressent le long du parcours prédéterminé (P).

7. Appareil selon les revendications 5 ou 6, dans lequel l'unité de commande (8) est programmée pour varier la durée d'application du faisceau (F) émis par l'émetteur laser (4) sur chaque paraison, en fonction de la vitesse à laquelle les paraisons (1) tournent autour de leurs axes (Z), afin de permettre au faisceau laser (F) de chauffer uniformément la surface (7) du corps (5) de chaque paraison (1).

8. Appareil selon l'une quelconque des revendications de 2 à 7, comprenant un système de miroirs (9) configuré pour refléter le faisceau (F) émis par l'au moins un émetteur laser (4) afin de l'orienter à la surface (7) du corps de paraison (5).

9. Appareil selon l'une quelconque des revendications précédentes, dans lequel l'au moins un émetteur laser (4) est configuré pour émettre un faisceau (F) ayant une extension suffisante pour frapper la paraison (1) le long d'une portion prédéfinie du parcours (P) lors d'un déplacement correspondant de la paraison, l'émetteur (4) étant fixe par rapport aux paraisons.

10. Appareil selon l'une quelconque des revendications de 1 à 8, dans lequel l'au moins un émetteur laser (4) est configuré pour émettre un faisceau laser (F) étant mobile le long du parcours (P), de manière à suivre la paraison (1) le long d'une portion prédéfinie du parcours (P) lors du déplacement correspondant de la paraison.

11. Procédé de chauffage de paraisons (1) en matière thermoplastique, comprenant une étape de transport des paraisons (1) le long d'un parcours prédéterminé (P) et une étape de chauffage des paraisons à mesure qu'elles se déplacent le long d'au moins une portion du parcours prédéterminé (P), dans lequel l'étape de chauffage comprend une étape consistant à générer un faisceau laser (F) qui frappe au moins une portion des paraisons (1), **caractérisé en ce que** le convoyeur (2) définit un poste d'entrée, où les paraisons sont acheminées vers l'appareil, et un poste de sortie, où les paraisons chauffées sont mises à disposition à la sortie de l'appareil, dans lequel l'au moins un émetteur laser est disposé au niveau du poste de sortie et dans lequel des dispositifs de chauffage d'autres types, différents des émetteurs laser, comprenant des lampes à incandescences ou des buses à air chaud, sont disposés dans une zone de l'appareil le long du convoyeur entre le poste d'entrée et le poste de sortie.

12. Procédé selon la revendication 11, dans lequel le faisceau laser (F) est orienté de manière à chauffer une surface (7) du corps (5) de paraison (1) adjacente à un col (6), chaque paraison (1) ayant un corps (5) ayant un fond fermé et un col (6) définissant une ouverture.

13. Procédé selon les revendications 11 ou 12, dans lequel le faisceau laser est généré au niveau d'une portion d'extrémité du parcours prédéterminé (P) correspondant à une direction (V) de passage des paraisons (1) le long du parcours (P).
